# EUROPEAN PATENT SPECIFICATION

(11) **EP 3 470 312 B1**
(45) Date of publication and mention of the grant of the patent: **24.02.2021**
(21) Application number: 17382680.1
(22) Date of filing: 11.10.2017
(51) Int. Cl.: B62D 31/02

(54) **PILLAR AND STRUCTURE FOR A VEHICLE AND VEHICLE COMPRISING SAID STRUCTURE**
SÄULE UND STRUKTUR FÜR EIN FAHRZEUG UND EIN FAHRZEUG MIT DIESER STRUKTUR
PILIER ET STRUCTURE POUR UN VÉHICULE ET UN VÉHICULE COMPRENANT CETTE STRUCTURE

(43) Date of publication of application: 17.04.2019
(73) Proprietor: Integralia Movilidad S.L., 31191 Esparza de Galar (ES)
(72) Inventor: LANA ASIAIN, Luis Oscar, 31191 ESPARZA DE GALAR (ES); RUIZ MURUGARREN, Angel Mª, 31191 ESPARZA DE GALAR (ES)
(74) Representative: Igartua, Ismael

(56) References cited:
- EP-A1- 2 105 374
- EP-A1- 2 982 578
- WO-A1-2016/174570
- DE-A1- 19 648 495
- DE-A1-102009 014 740
- GB-A- 146 552
- US-A1- 2008 001 437

## Description

### TECHNICAL FIELD

The present invention relates to pillars for vehicles and pillar-based internal structures for vehicles which support the body and loads of said vehicle.

### PRIOR ART

Vehicles usually comprise an internal structure that is attached to the chassis and supports the body and loads of the vehicle. Said structure is formed based on pillars and these pillars are named from the front to the back of the vehicle using successive letters of the alphabet. Depending on the type of vehicle (for example, a sedan, a minivan, a van, a minibus, a bus, etc.) the structure will comprise a larger or smaller number of pillars.

In an automobile, for example, the A-pillar is in charge of holding the windshield of the automobile and the B-pillar is the one located close to, immediately behind, the position of the driver. The D-pillar is the last pillar arranged in the back part of a conventional family vehicle. The C-pillar, in this case, is arranged between the B-pillar and D-pillar. However, depending on the type of vehicle this order or classification may vary.

Depending on vehicle length, a larger or smaller number of pillars will be interspersed between the last pillar (the pillar of the back) and the B-pillar (the pillar arranged immediately behind the position of the driver).

The pillars are usually formed based on right and left side columns that are attached by welding to a cross beam which is part of the roof and/or part of the floor. The attachment points between the side columns and the beams of the floor and roof are usually reinforced by braces that are welded or screwed to the different beams and columns.

The different pillars are attached to one another through a plurality of longitudinal beams arranged in the direction of travel of the vehicle on the sides and in the roof of the vehicle by welding. The roof is also usually reinforced with cross beams, forming a lattice-like roof structure.

As described up until now, pillars are usually formed by different vertical and horizontal parts which are attached at their ends by welding and are reinforced with braces, but pillars which are formed by a single part which is bent to form the sides, the roof and the floor of the pillar are also known.

In this sense, US20160152274A1 discloses a pillar for a vehicle comprising a roof portion, a floor portion, a left side portion and a right side portion. The pillar is formed as a single piece that is bent to form the roof portion, the left and right side portions and the floor portion. The ends of the pillar are overlapped in the floor portion to form a closed contour. The pillar comprises a U-shaped cross section.

US2008001437 A1 discloses several pillars for a vehicle. The pillars comprise a roof portion, a floor portion, a left side portion and a right side portion. The roof portion and the side portions are formed by at least two profiles comprising at least one flat longitudinal face, the cross section of those profiles being extended in opposite directions from said flat longitudinal faces. The roof portion comprises one profile extending from the rear to the front part of the vehicle and at least a second and a third profiles disposed adjacent and parallel to said first profile extending from the rear to the front, so that a portion of said longitudinal faces of the adjacent profiles are arranged in the direction of forward movement of the vehicle. The second and the third profiles of the roof area are bend in such a way that they form another pillar comprising a roof portion of a double profile so that the flat longitudinal faces in the joint area are arranged perpendicular to the direction of forward movement of the vehicle.

### DISCLOSURE OF THE INVENTION

One object of the invention is to provide a pillar for a vehicle, as defined in the claims.

A second object of the invention is to provide a structure for a vehicle, and a third object is to provide said vehicle, as defined in the claims.

The pillar of the invention comprises a roof portion, a floor portion, a left side portion and a right side portion, at least the roof portion and side portions being formed by at least two profiles comprising at least one flat longitudinal face, the profiles being laterally attached to one another by said flat longitudinal face and the cross sections of the profiles extending in opposite directions from said flat longitudinal faces. The flat longitudinal faces of the profiles are arranged perpendicular to the direction of forward movement of the vehicle.

The profiles are tubular, the cross section of the profiles being preferably square or rectangular, and said tubular profiles being attached to one another on the widest side of said tubular parts if the cross section is rectangular. In addition, the roof portion and side portions are formed by a single inverted U-shaped segment or by two bent, inverted L-shaped segments attached to one another at one end.

The strength of said structure can be increased with the pillar and structure of the invention, and therefore strength and safety of the vehicle are increased, the structure of the invention being capable of passing rollover tests defined by the corresponding regulation R66.02 without having to place extra reinforcement elements between the different pillars, particularly in the roof, or reinforcement braces. Likewise, since the strength of the individual pillars of the structure is increased, it is possible to make the structure of the vehicle lighter, for example by reducing the thickness of the profiles of the pillars, such that the same or an even better effect is achieved with a lighter structure.

These and other advantages and features of the invention will become evident in view of the drawings and the detailed description of the invention.

### DESCRIPTION OF THE DRAWINGS

Figure 1 shows a perspective view of the structure of a vehicle according to an embodiment of the invention.
Figure 2A schematically shows the attachment of the tubular profiles of a pillar of the structure of Figure 1 according to a first embodiment.
Figure 2B schematically shows the attachment of the tubular profiles of a pillar of the structure according to another embodiment.
Figure 2C shows the cross section of one of the tubular profiles of a pillar of the structure of Figure 1.
Figure 3A shows a front view of the two bent segments forming the roof portion and the left side portion, and the roof portion and the right side portion of a pillar of the structure of Figure 1 before the attachment of said segments.
Figure 3B shows a front view of the two bent segments forming the roof portion and the left side portion, and the roof portion and the right side portion of a pillar of the structure of Figure 1 after the attachment of said segments.
Figure 3C shows a detail of the attachment of the two bent segments forming the roof portion and the left side portion, and the roof portion and the right side portion of a pillar of the structure of Figure 1.
Figure 3D shows a front view of the roof portion and side portions of a pillar according to another embodiment of the invention.
Figure 4A shows a front view of an embodiment of the roof portion, the side portions and the floor portion of a pillar of the structure of Figure 1.
Figure 4B shows a front view of another embodiment of the roof portion, the side portions and the floor portion of a pillar of the invention.
Figure 4C shows a front view of another embodiment of the roof portion, the side portions and the floor portion of a pillar of the invention.

### DETAILED DISCLOSURE OF THE INVENTION

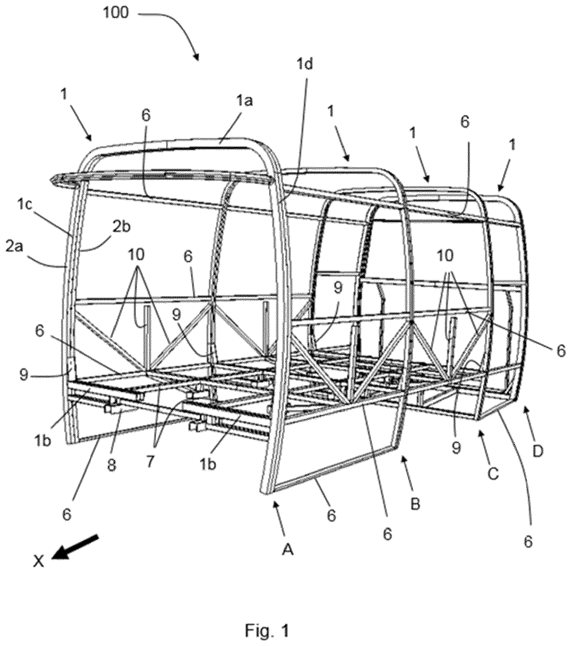

Figure 1 shows the structure of a vehicle 100 according to a preferred embodiment of the invention. As shown in said drawing, the structure 100 comprises a plurality of pillars 1 which, depending on the location they occupy, are identified with one letter of the alphabet or with another.

In a non-limiting example of the invention, the vehicle refers to a minibus, although the description provided below is also valid for any type of vehicle, such as, for example, a bus, a sedan, a minivan, a family vehicle, a van, a motor home, etc.

Therefore, the structure 100 of the preferred embodiment corresponds with the internal structure of a microbus and comprises four pillars 1, the first pillar 1 being identified according to the direction of travel of the vehicle with the letter A and the last pillar 1 with the letter D. The intermediate B-pillar and C-pillar are arranged between the first A-pillar and the last D-pillar, respectively, according to the direction of travel of the vehicle. In this case, the pillar referred to as A-pillar is the one located close to the position of the driver.

The structure 100 of the vehicle not only supports the body of the vehicle, but is also an important safety element of the vehicle. The structure 100 greatly prevents the body of the vehicle from deforming in the event of rollover or impact, thereby minimizing the possible injuries that passengers of the vehicle may sustain.

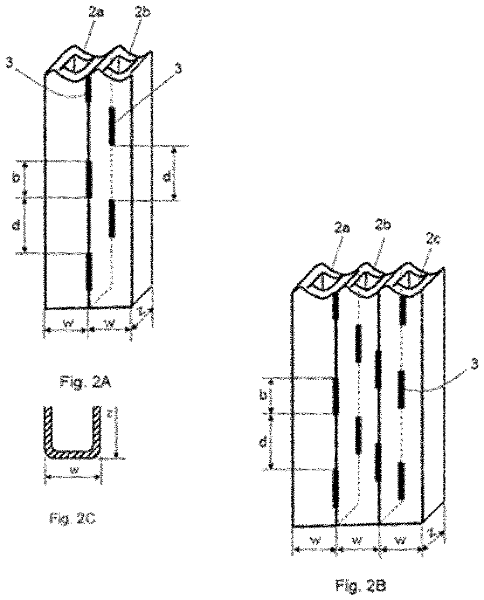

Each pillar 1 comprises a roof portion 1a, a floor portion 1b, a left side portion 1c and a right side portion 1d, at least the roof portion 1a and side portions 1c and 1d being formed by at least two profiles 2a and 2b comprising at least one flat longitudinal face, the profiles 2a and 2b being laterally attached to one another by said flat longitudinal face, and the cross sections of said profiles 2a and 2b extending in opposite directions from said flat longitudinal faces, as schematically seen in Figure 2A.

The strength of the individual pillars 1 of the structure 100 of the vehicle is increased with the pillar 1 of the invention, and therefore the strength of the structure 100 of the invention is also increased, contributing to the vehicle being stronger and safer, the structure 100 of the invention being capable of passing the rollover tests defined by the corresponding regulation R66.02 without having to place additional reinforcement elements between the different pillars 1, particularly in the roof, and reinforcement braces. Likewise, since the strength of the individual pillars 1 of the structure 100 is increased, it is possible to make the structure 100 of the vehicle lighter, for example by reducing the thickness of the profiles 2a and 2b of the pillars 1, such that the same or higher strength is achieved with a lighter structure 100.

The attached flat longitudinal faces of the profiles 2a and 2b are arranged preferably perpendicular to the direction of forward movement X of the vehicle, as schematically shown in Figure 1.

The profiles 2a and 2b of profile 1 of the preferred embodiment of the invention are tubular, the cross section of said profiles 2a and 2b being preferably square or rectangular, as shown in Figure 2C, said tubular profiles 2a and 2b being attached to one another on the widest side of said tubular parts 2a, 2b if the cross section is rectangular, i.e., measure Z (corresponding to the direction perpendicular to the direction of forward movement X of the vehicle) is greater than measure W (corresponding to the direction of forward movement X of the vehicle) in the example of Figure 2C.

As has already been described, the profiles 2a and 2b of the preferred embodiment of the invention are tubular, but the invention remains valid for profiles that do not demarcate a closed space, such as IPN- or UPN-type profiles, for example.

The dimensions of the profiles used in the different pillars 1 can be the same for the four pillars 1 of the structure 100 of Figure 1, however it has been verified that by increasing the dimensions of the profiles of the pillars of ends A and D, the vehicle's behavior in the rollover test is improved. Therefore, in the preferred embodiment of the invention the dimensions of the profiles 2a and 2b of the pillars of ends A and D are greater than the dimensions of the profiles 2a and 2b of the intermediate B-pillar and C-pillar.

The tubular profiles 2a and 2b are attached to one another by means of weld beads 3 arranged on both sides of the attachment faces of the tubular profiles 2a and 2b, as shown in Figure 2A. The weld beads 3 of each side are applied following a pattern comprising a plurality of beads 3 with a length between 20 and 40 mm, preferably 30 mm, spaced from one another by a distance between 80 and 120 mm, preferably 100 mm.

In the preferred embodiment of the invention, said weld beads 3 of either side are arranged in an alternating manner, i.e., they are not aligned or arranged at the same height.

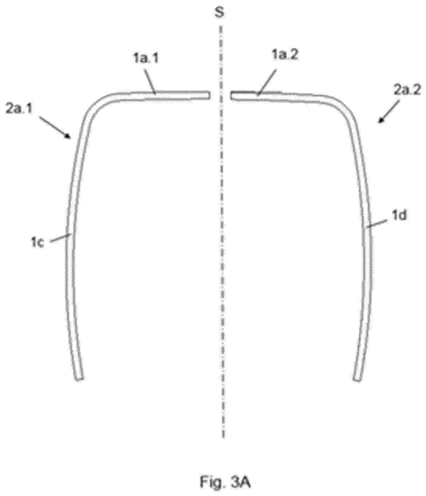

In the preferred embodiment of the invention, the roof portion 1a and side portions 1c and 1d are formed by two bent, inverted L-shaped segments 2a.1 and 2a.2 attached to one another at one end, as will be described in detail below. As shown in Figure 3A, both segments 2a.1 and 2a.2 are symmetrical and arranged facing one another around an axis of symmetry S. Each segment 2a.1 and 2a.2 is formed by a single part, each segment 2a.1 and 2a.2 comprising a side portion 1c or 1d and a roof portion segment 1a.1 or 1a.2.

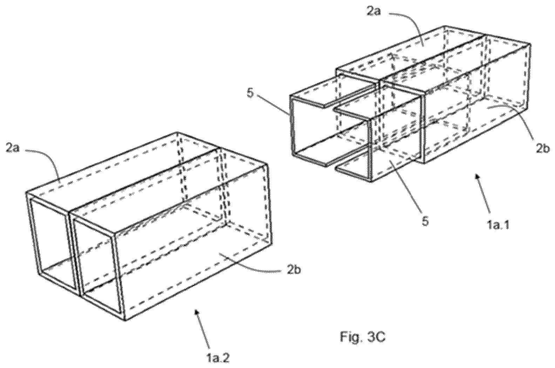

The two segments 2a.1 and 2a.2 are attached to one another by means of plates 5, preferably U-shaped. One plate 5 is housed at the ends of the tubular profiles 2a and 2b of both facing segments 2a.1 and 2a.2 and another plate 5 is housed at the ends of the contiguous tubular profiles 2a and 2b in a similar manner, such that a portion of each plate 5 is housed inside the corresponding profile 2a or 2b of one segment 2a.1 and the other segment 2a.2, as depicted in Figure 3C.

Figure 3C schematically depicts how the plates 5 are arranged in the roof portion segments 1a.1 and 1a.2 of the corresponding inverted L-shaped segments 2a.1 and 2a.2. To improve understanding, only part of the segments 1a.1 and 1a.2 and plates 5 housed in one of the segments 1a.1 has been shown.

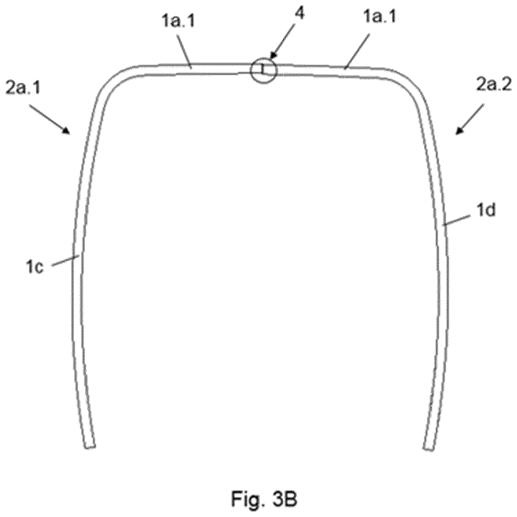

When the two segments 2a.1 and 2a.2 are attached to one another, as shown in Figure 3B, the corresponding roof portion segments 1a.1 and 1a.2 are attached to one another, the roof portion 1a and the right and left portions 1c and 1d of the pillar 1 being formed.

Each plate 5 is permanently attached to the corresponding tubular profiles 2a and 2b by means of a plurality of weld points. Additionally, a weld bead can be applied in the attachment joint of each roof portion segment 1a.1 and 1a.2 around the accessible edges.

As shown in Figure 3C, the faces of the plates 5 cooperate with the accessible faces of the corresponding profiles 2a and 2b of each roof portion segment 1a.1 and 1a.2, thereby favoring the attachment of the profiles 2a and 2b of the segments 1a.1 and 1a.2 and the corresponding plates 5 by means of welding.

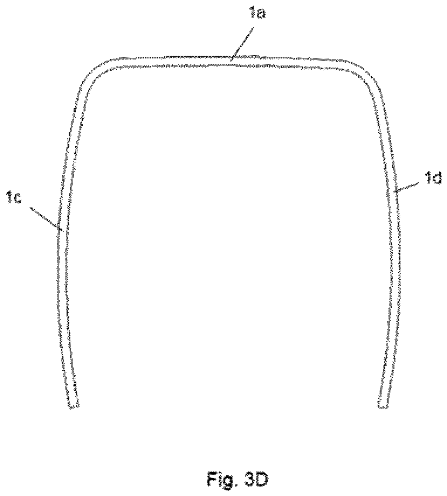

In another embodiment shown in Figure 3D, the roof portion 1a and side portions 1c and 1d are formed by a single inverted U-shaped segment, i.e., each profile 2a and 2b of the pillar 1 is formed by a single inverted U-shaped part, where both profiles 2a and 2b are preferably attached to one another by means of the weld beads 3 described above to form the roof portion 1a and side portions 1c and 1d of the pillar 1.

Both when the pillar 1 is formed by one segment and when it is formed by two segments 2a.1 and 2a.2, reinforcement braces that are usually placed in the corners of the upper portion, typically by welding, in the regions of attachment between the roof portion 1a and the side portions 1c and 1d are prevented, since an attachment as such does not exist in both cases, and therefore invasion of the passenger space of the vehicle in said regions is minimized, the passenger space being maximized, thereby increasing vehicle comfort.

In the preferred embodiment of the invention, the floor portion 1b is also formed by at least two profiles 2a and 2b laterally attached to one another at the flat face thereof, as in the case of the portion of roof 1a or the side portions 1c or 1d, said profiles 2a and 2b having preferably the same cross section as the rest of the profiles 2a and 2b used.

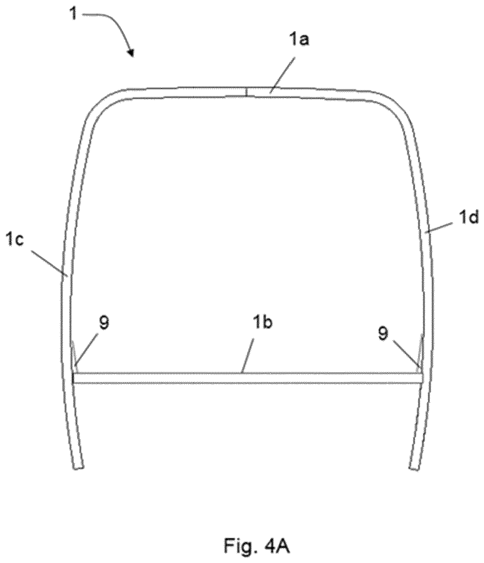

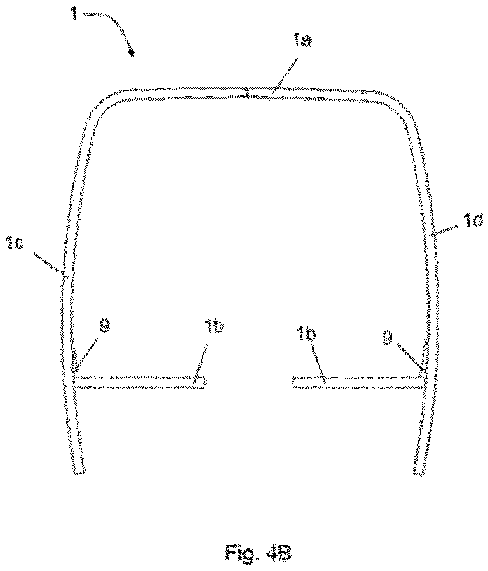

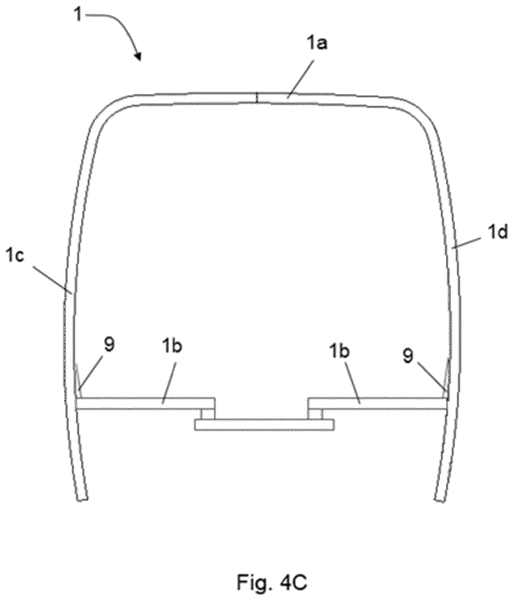

In the preferred embodiment, the floor portion 1b is formed by a segment, as shown in Figure 4A, that is attached to the side portions 1c and 1d, preferably in the lower portion, by means of welding, said attachment being reinforced by means of U-shaped plates 9 which embraced the respective side portion 1c or 1d and are supported on the floor portion 1b. A plate 9 is placed at each end of the floor portion 1b, each plate 9 being slightly tilted, as schematically depicted in Figures 4A, 4B and 4C, and welded to the respective side portion 1c or 1d and to the floor portion 1b.

Optionally, the floor portion 1b can be formed by two or more segments, as shown in profile A of the structure 100 of Figure 1, a space can even be left between both segments 1b, as shown in Figure 4B, or both segments 1b can even be attached to one another by means of a third segment arranged at a different level, for example in the lower portion, as shown in Figure 4C. In the preferred embodiment of the invention, the floor portion 1b of the A-pillar, i.e., the first pillar 1 according to the direction of forward movement of the vehicle, is formed by two segments, like those shown for example in Figures 4B and 4C, which allows building in the empty space between the two segments 1b a ramp or step compensating for the difference in height between the vehicle access level and the vehicle floor level where passenger seats are located.

The regions of attachment between the floor portion 1b and the side portions 1c and 1d constitute a junction that must be reinforced. In the state of the art, these junctions are usually reinforced with braces that are usually placed at a certain angle for them to perform their function. The use of plates 9 in the preferred embodiment of the invention, replacing conventional braces, allows limiting the invasion of passenger space of the vehicle, and therefore also contributes to maximizing the passenger space, in this case in the lower region of the vehicle.

The pillar 1 is preferably made of structural stainless steel, i.e., the tubular profiles 2a and 2b used to form the pillar 1, or at least the profiles 2a and 2b of the floor portion 1a and the side portions 1c and 1d, are made of said material. Structural stainless steel is more resistant and lightweight compared to conventionally used materials, such as steel or stainless steel, for example; even though it is more expensive, it has the advantage of not negatively affecting the welding process. By combining this material with the fact that at least two laterally attached tubular profiles 2a and 2b are used, which greatly increases the strength and stiffness of the double profile obtained, the thicknesses of the profiles 2a and 2b used can be reduced, which entails a significant savings in terms of material and compensates for the increase in the price of the material. Likewise, by reducing the thicknesses of the profiles 2a and 2b used, passenger space in the vehicle is maximized, where the number of seats in the vehicle can even be increased.

In a non-limiting example, the external dimensions of each profile 2a and 2b of the intermediate B-pillar and C-pillar are 30 x 40 mm, while the external dimensions of each profile of the pillars of ends A and D are 40 x 60 mm, where the thickness of the intermediate B-pillar and C-pillar is between 1.5 and 3 mm, preferably 2 mm, and the thickness of the pillars of ends A and D is between 1.8 and 3.2 mm, preferably 2.5 mm.

As has already been described, the structure 100 of the vehicle of the invention comprises at least one pillar 1 as described.

As has already been described, the structure 100 of the preferred embodiment of the invention comprises four pillars A, B, C and D. Said pillars 1 are attached to one another by longitudinal lateral cross members 6 arranged in the direction of forward movement X of the vehicle, as shown in Figure 1.

Additionally, the floor portions 1b of the pillars 1 of the structure 100 are attached to one another by longitudinal lower cross members 7 also arranged in the direction of forward movement X of the vehicle, as seen in Figure 1.

The structure 100 of the invention also comprises a plurality of plates 8, preferably inverted U-shaped, arranged along the lower cross members 7, as seen in Figure 1, for guiding and fixing the structure 100 with respect to the vehicle chassis.

Said plates 8 embraced profiles arranged on the chassis of the vehicle, where the structure 100 can slide on the chassis to readily fix the desired end position. Once the end position of the structure 100 has been defined, said plates 8 are welded to the profiles of the chassis, thereby fixing the position of the structure 100 on the chassis of the vehicle.

Reinforcement beams 10 can additionally be arranged, tilted or vertically, between two pillars 1 close to the passenger region, as seen in Figure 1.

Optionally, though unnecessary for passing the rollover tests, it is possible to additionally place longitudinal cross members between the roof portions 1a of the structure 100, not shown in the drawings, also in the direction of forward movement X of the vehicle, said cross members being used as a support for the roof of the vehicle.

The pillars 1 of the invention are also configured to be individually added to a pre-established structure of a vehicle. Therefore, for example, by modifying the pillars of ends A and D of a vehicle, such as in a van, by replacing the original pillars with the pillars 1 of the invention or adding the pillars 1 of the invention to the original pillars, said van would be able to pass the rollover tests in a simple and low-cost manner.

Optionally, the pillar 1 of the invention may be formed by three profiles 2a, 2b and 2c that are attached to one another on the sides thereof (as described for the preferred embodiment), as schematically depicted in Figure 2B. This configuration may be advantageous to even further reinforce a pre-established structure, such as the one described in the preceding paragraph, for example.

## Claims

1. Pillar for a vehicle, comprising a roof portion (1a), a floor portion (1b), a left side portion (1c) and a right side portion (1d), at least the roof portion (1a) and side portions (1c, 1d) being formed by at least two profiles (2a, 2b) comprising at least one flat longitudinal face, the profiles (2a, 2b) being laterally attached to one another by said flat longitudinal face and the cross sections of the profiles (2a, 2b) extending in opposite directions from said flat longitudinal faces wherein said flat longitudinal faces of the profiles (2a, 2b) are arranged perpendicular to the direction of forward movement of the vehicle, **characterized in that** the profiles (2a, 2b) are tubular, the cross section of the profiles (2a, 2b) being preferably square or rectangular, and said tubular profiles (2a, 2b) being attached to one another on the widest side of said tubular parts (2a, 2b) if the cross section is rectangular and **in that** the roof portion (1a) and side portions (1c, 1d) are formed by a single inverted U-shaped segment or by two bent, inverted L-shaped segments (2a.1, 2a.2) attached to one another at one end.

2. Pillar according to any of the preceding claims, wherein the profiles (2a, 2b) are attached to one another by means of weld beads (3) arranged on both sides of the attachment faces of the profiles (2a, 2b), the weld beads (3) of either side preferably being arranged in an alternating manner.

3. Pillar according to claim 1 or 2, wherein both L-shaped segments (2a.1, 2a.2) are symmetrical.

4. Pillar according to any claims 1 to 3, wherein the L-shaped segments (2a.1, 2a.2) are attached to one another by means of plates (5), preferably U-shaped, that are housed at the ends of the tubular profiles (2a, 2b) of both segments (2a.1, 2a.2), said plates (5) being attached to the tubular profiles (2a, 2b) preferably by means of a plurality of weld points.

5. Pillar according to any of the preceding claims, wherein the floor portion (1b) is formed by at least two profiles (2a, 2b) laterally attached to one another, said profiles (2a, 2b) having preferably the same cross section as the rest of the profiles (2a, 2b).

6. Pillar according to any of the preceding claims, wherein the floor portion (1b) is formed by a segment that is attached to the side portions (1c, 1d) by means of welding, said attachment being reinforced by means of U-shaped plates (9) which embraced the respective side portion (1c, 1d) and are supported on the floor portion (1b), said plates (9) being slightly tilted and welded to the respective side portion (1c, 1d) and to the floor portion (1b).

7. Pillar according to any of the preceding claims, wherein the pillar (1) is made of structural stainless steel.

8. Structure of a vehicle, **characterized in that** it comprises at least one pillar (1) according to any of the preceding claims.

9. Structure according to claim 8, comprising a plurality of pillars (1), said pillars (1) being attached to one another by longitudinal lateral cross members (6) arranged in the direction of forward movement of the vehicle.

10. Structure according to claim 8 or 9, wherein the floor portions (1b) of the pillars (1) are attached to one another by longitudinal lower cross members (7) arranged in the direction of forward movement of the vehicle.

11. Structure according to claim 10, comprising a plurality of plates (8), preferably inverted U-shaped, arranged along the lower cross members (7) for guiding and fixing the structure (100) with respect to the vehicle chassis.

12. Vehicle **characterized in that** it comprises a structure according to any of claims 8 to 11.

## Patentansprüche

1. Säule für ein Fahrzeug, umfassend einen Dachteil (1a), einen Bodenteil (1b), einen linken Seitenteil (1c) und einen rechten Seitenteil (1d), wobei mindestens der Dachteil (1a) und die Seitenteile (1c, 1d) aus mindestens zwei Profilen (2a, 2b) umfassend mindestens eine flache Längsfläche gebildet sind, wobei die Profile (2a, 2b) durch die genannte flache Längsfläche seitlich aneinander befestigt sind und wobei sich die Querschnitte der Profile (2a, 2b) von den genannten flachen Längsflächen aus in entgegengesetzte Richtungen erstrecken, wobei die genannten flachen Längsflächen der Profile (2a, 2b) senkrecht zur Richtung der Vorwärtsbewegung des Fahrzeugs angeordnet sind, **dadurch gekennzeichnet, dass** die Profile (2a, 2b) rohrförmig sind, wobei der Querschnitt der Profile (2a, 2b) vorzugsweise quadratisch oder rechteckig ist, und wobei die genannten rohrförmigen Profile (2a, 2b) auf der breitesten Seite der genannten rohrförmigen Stücke (2a, 2b) aneinander befestigt sind, wenn der Querschnitt rechteckig ist, und dass der Dachteil (1a) die und Seitenteile (1c, 1d) aus einem einzigen umgekehrten U-förmigen Segment oder aus zwei gebogenen, umgekehrten L-förmigen Segmenten (2a.1, 2a.2), welche an einem Ende aneinander befestigt sind, gebildet sind.

2. Säule nach einem der vorhergehenden Ansprüche, wobei die Profile (2a, 2b) mittels Schweißperlen (3) aneinander befestigt sind, welche auf beiden Seiten der Befestigungsflächen der Profile (2a, 2b) angeordnet sind, wobei die Schweißperlen (3) jeder Seite vorzugsweise abwechselnd angeordnet sind.

3. Säule nach Anspruch 1 oder 2, wobei beide L-förmigen Segmente (2a.1, 2a.2) symmetrisch sind.

4. Säule nach einem der Ansprüche 1 bis 3, wobei die L-förmigen Segmente (2a.1, 2a.2) mittels, vorzugsweise U-förmiger, Platten (5) aneinander befestigt sind, welche an den Enden der rohrförmigen Profile (2a, 2b) beider Segmente (2a.1, 2a.2) aufgenommen sind, wobei die genannten Platten (5) vorzugsweise mittels einer Vielzahl von Schweißpunkten an den rohrförmigen Profilen (2a, 2b) befestigt sind.

5. Säule nach einem der vorhergehenden Ansprüche, wobei der Bodenteil (1b) aus mindestens zwei Profilen (2a, 2b) gebildet ist, welche seitlich aneinander befestigt sind, wobei die genannten Profile (2a, 2b) vorzugsweise den gleichen Querschnitt wie die restlichen Profile (2a, 2b) aufweisen.

6. Säule nach einem der vorhergehenden Ansprüche, wobei der Bodenteil (1b) aus einem Segment gebildet ist, welches an den Seitenteilen (1c, 1d) mittels Schweißens befestigt ist, wobei die genannte Befestigung mittels U-förmiger Platten (9) verstärkt ist, welche den jeweiligen Seitenteil (1c, 1d) umklammern und auf dem Bodenteil (1b) gestützt sind, wobei die genannten Platten (9) leicht geneigt und am jeweiligen Seitenteil (1c, 1d) und am Bodenteil (1b) geschweißt sind.

7. Säule nach einem der vorhergehenden Ansprüche, wobei die Säule (1) aus strukturellem Edelstahl hergestellt ist.

8. Struktur eines Fahrzeugs, **dadurch gekennzeichnet, dass** sie mindestens eine Säule (1) nach einem der vorhergehenden Ansprüche umfasst.

9. Struktur nach Anspruch 8, umfassend eine Vielzahl von Säulen (1), wobei die genannten Säulen (1) durch seitliche Längsquerträger (6) aneinander befestigt sind, welche in der Richtung der Vorwärtsbewegung des Fahrzeugs angeordnet sind.

10. Struktur nach Anspruch 8 oder 9, wobei die Bodenteile (1b) der Säulen (1) durch untere Längsquerträger (7) aneinander befestigt sind, welche in der Richtung der Vorwärtsbewegung des Fahrzeugs angeordnet sind.

11. Struktur nach Anspruch 10, umfassend eine Vielzahl von, vorzugsweise umgekehrten U-förmigen, Platten (8), welche entlang der unteren Querträger (7) angeordnet sind, um die Struktur (100) in Bezug auf das Fahrzeuggestell zu führen und zu fixieren.

12. Fahrzeug, **dadurch gekennzeichnet, dass** es eine Struktur nach einem der Ansprüche 8 bis 11 umfasst.

## Revendications

1. Pilier pour un véhicule, comprenant une partie de toit (1a), une partie de sol (1b), une partie latérale gauche (1c) et une partie latérale droite (1d), au moins la partie de toit (1a) et les parties latérales (1c, 1d) étant formées par au moins deux profilés (2a, 2b) comprenant au moins une face longitudinale plate, les profilés (2a, 2b) étant fixés latéralement l'un à l'autre par ladite face longitudinale plate et les sections transversales des profilés (2a, 2b) s'étendant dans des directions opposées depuis lesdites faces longitudinales plates dans lequel lesdites faces longitudinales plates des profilés (2a, 2b) sont aménagées perpendiculaires à la direction du mouvement vers l'avant du véhicule, **caractérisé en ce que** les profilés (2a, 2b) sont tubulaires, la section transversale des profilés (2a, 2b) étant de préférence carrée ou rectangulaire, et lesdits profilés tubulaires (2a, 2b) étant fixés l'un à l'autre sur le côté les plus large des dites pièces tubulaires (2a, 2b) si la section transversale est rectangulaire et **en ce que** la partie de toit (1a) et les parties latérales (1c, 1d) sont formées par un seul segment en forme de U inversée ou par deux segments courbés en forme de L inversée (2a.1, 2a.2) fixés l'un à l'autre par une extrémité.

2. Pilier selon l'une quelconque des revendications précédentes, dans lequel les profilés (2a, 2b) sont fixés l'un à l'autre par le biais de cordons de soudure (3) aménagés sur les deux côtés des faces de fixation des profilés (2a, 2b), les cordons de soudure (3) de l'un et l'autre côté étant de préférence aménagés d'une manière alternée.

3. Pilier selon la revendication 1 ou 2, dans lequel les deux segments en forme de L (2a.1, 2a.2) sont symétriques.

4. Pilier selon l'une quelconque des revendications 1 à 3, dans lequel les segments en forme de L (2a.1, 2a.2) sont fixés l'un à l'autre par le biais de plaques (5), de préférence en forme de U, qui sont logées aux extrémités des profilés tubulaires (2a, 2b) des deux segments (2a.1, 2a.2), lesdites plaques (5) étant fixées aux profilés tubulaires (2a, 2b) de préférence par le biais d'une pluralité de points de soudure.

5. Pilier selon l'une quelconque des revendications précédentes, dans lequel la partie de sol (1b) est formée par au moins deux profilés (2a, 2b) fixés latéralement l'un à l'autre, lesdits profilés (2a, 2b) ayant de préférence la même section transversale que le reste des profilés (2a, 2b).

6. Pilier selon l'une quelconque des revendications précédentes, dans lequel la partie de sol (1b) est formée par un segment qui est fixé aux parties latérales (1c, 1d) par le biais de soudure, ladite fixation étant renforcée par le biais des plaques en forme de U (9) qui contiennent la partie latérale respective (1c, 1d) et sont soutenues sur la partie de sol (1b), lesdites plaques (9) étant légèrement inclinées et soudées à la partie latérale respective (1c, 1d) et à la partie de sol (1b).

7. Pilier selon l'une quelconque des revendications précédentes, dans lequel le pilier (1) est réalisé en acier inoxydable de construction.

8. Structure d'un véhicule, **caractérisée en ce qu'**elle comprend au moins un pilier (1) selon l'une quelconque des revendications précédentes.

9. Structure selon la revendication 8, comprenant une pluralité de piliers (1), lesdits piliers (1) étant fixés les uns aux autres par des traverses latérales longitudinales (6) aménagées dans la direction du mouvement vers l'avant du véhicule.

10. Structure selon la revendication 8 ou 9, dans laquelle les parties de sol (1b) des piliers (1) sont fixées les unes aux autres par des traverses inférieures longitudinales (7) aménagées dans la direction du mouvement vers l'avant du véhicule.

11. Structure selon la revendication 10, comprenant une pluralité de plaques (8), de préférence en forme de U inversée, aménagées le long des traverses inférieures (7) pour guider et fixer la structure (100) par rapport au châssis de véhicule.

12. Véhicule, **caractérisé en ce qu'il** comprend une structure selon l'une quelconque des revendications 8 à 11.
